(19) **Europäisches Patentamt / European Patent Office / Office européen des brevets**

(11) **EP 4 564 695 A1**

(12) **EUROPEAN PATENT APPLICATION**
published in accordance with Art. 153(4) EPC

(43) Date of publication:
04.06.2025  Bulletin 2025/23

(21) Application number: 23846926.6

(22) Date of filing: 21.07.2023

(51) International Patent Classification (IPC):
**H04B 7/06** (2006.01)          **H04B 7/0456** (2017.01)
**H04W 72/23** (2023.01)

(52) Cooperative Patent Classification (CPC):
**H04B 7/0456; H04B 7/06; H04W 72/23**

(86) International application number:
**PCT/KR2023/010581**

(87) International publication number:
**WO 2024/025267 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 26.07.2022  KR 20220092242

(71) Applicant: **LG Electronics Inc.**
Yeongdeungpo-gu
Seoul 07336 (KR)

(72) Inventors:
• **KIM, Hyungtae**
  Seoul 06772 (KR)
• **KANG, Jiwon**
  Seoul 06772 (KR)
• **PARK, Haewook**
  Seoul 06772 (KR)

(74) Representative: **Plasseraud IP**
**104 Rue de Richelieu**
**CS92104**
**75080 Paris Cedex 02 (FR)**

(54) **METHOD FOR TRANSMITTING CHANNEL STATUS INFORMATION FOR MULTIPLE TIME INSTANCES IN WIRELESS COMMUNICATION SYSTEM, AND APPARATUS THEREFOR**

(57)    The present disclosure relates to a method performed by user equipment (UE) in a wireless communication system. Particularly, the method comprises the steps of: receiving, from a base station (BS), a control signal for channel status information (CSI) reporting; on the basis of the control signal, receiving at least one channel measurement resource (CMR) from the BS; on the basis of the at least one CMR, calculating, from a time domain (TD) compressed codebook, at least one precoding matrix index (PMI) for at least one time instance; and on the basis of an uplink grant resource included in the control signal, transmitting, to the BS, the CSI including information regarding a plurality of non-zero coefficients (NZCs) related to the at least one PMI, wherein the plurality of NZCs have priority values determined by considering an index of a time domain (TD) basis vector, an index of a frequency domain (FD) basis vector, an index of a spatial domain (SD) basis vector, and a layer index in that order.

【FIG.16】

- A05 Receiving control signal for CSI reporting
- A10 Receiving at least one CMR
- A15 Estimating NZC for multiple time instances in TD compressed codebook
- A20 Generating CSI by dropping at least one NZC according to priority values if UL grant is smaller than payload
- A25 Reporting CSI

## Description

[Technical Field]

The present disclosure relates to a wireless communication system and, more particularly, to a method of transmitting channel state information for multiple time instances in a wireless communication system and apparatus therefor.

[Background Art]

Wireless communication systems are being widely deployed to provide various types of communication services such as voice and data. In general, a wireless communication system is a multiple access system that can support communication with multiple users by sharing available system resources (bandwidth, transmission power, etc.). Examples of multiple access systems include code division multiple access (CDMA) systems, frequency division multiple access (FDMA) systems, time division multiple access (TDMA) systems, orthogonal frequency division multiple access (OFDMA) systems, and single carrier frequency division multiple access (SC-FDMA) systems.

[Disclosure]

[Technical Problem]

Hereinafter, a method of transmitting channel state information for multiple time instances in a wireless communication system and apparatus therefor will be described based on the above discussion.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

[Technical Solution]

In one aspect of the present disclosure, provided herein is a method performed by a user equipment (UE) in a wireless communication system. The method may include receiving a control signal for reporting channel status information (CSI) from a base station (BS), receiving at least one channel measurement resource (CMR) based on the control signal from the BS, calculating at least one precoding matrix index (PMI) related to at least one time instance from a time domain (TD) compressed codebook based on the at least one CMR, and transmitting the CSI to the BS based on an uplink grant resource included in the control signal, the CSI comprising information about a plurality of non-zero coefficients (NZCs) related to the at least one PMI, wherein the plurality of NZCs may have priority values determined in order of an index of TD basis vectors, an index of frequency domain (FD) basis vectors, an index of spatial domain (SD) basis vectors, and a layer index.

In another aspect of the present disclosure, provided herein is a UE in a wireless communication system. The UE may include at least one transceiver, at least one processor, and at least one computer memory operably connectable to the at least one processor and storing instructions that, when executed, cause the at least one processor to perform operations. The operations may include receiving a control signal for reporting of CSI from a BS, receiving at least one CMR from the BS based on the control signal, calculating at least one PMI related to at least one time instance from a TD compressed codebook based on the at least one CMR, and transmitting the CSI to the BS based on an uplink grant resource included in the control signal, the CSI comprising information about a plurality of NZCs related to the at least one PMI, wherein the plurality of NZCs may have priority values determined in order of an index of TD basis vectors, an index of FD basis vectors, an index of SD basis vectors, and a layer index.

In another aspect of the present disclosure, provided herein is a processing device in a wireless communication system. The processing device may include at least one processor, and at least one computer memory operably connectable to the at least one processor and storing instructions that, when executed, cause the at least one processor to perform operations for a UE. The operations may include receiving a control signal for reporting of CSI from a BS, receiving at least one CMR from the BS based on the control signal, calculating at least one PMI related to at least one time instance from a TD compressed codebook based on the at least one CMR, and transmitting the CSI to the BS based on an uplink grant resource included in the control signal, the CSI comprising information about a plurality of NZCs related to the at least one PMI, wherein the plurality of NZCs may have priority values determined in order of an index of TD basis vectors, an index of FD basis vectors, an index of SD basis vectors, and a layer index.

In another aspect of the present disclosure, provided herein is a computer-readable storage medium. The computer-readable storage medium may store at least one program code comprising instructions that, when executed, cause at least one processor to perform operations for a UE. The operations may include receiving a control signal for reporting of CSI from a BS, receiving at least one CMR from the BS based on the control signal, calculating at least one PMI related to at least one time instance from a TD compressed codebook based on the at least one CMR, and transmitting the CSI to the BS based on an uplink grant resource included in the control signal, the CSI comprising information about a plurality of NZCs related to the at least one PMI, wherein the plurality of NZCs may have priority values determined in order of an index of TD basis vectors, an index of FD basis vectors, an index of SD basis vectors, and a layer index.

In each of the aspects of the present disclosure, the plurality of NZCs may be configured to have a higher priority value as the index of the TD basis vectors increases, have a higher priority value as the index of the FD basis vectors increases when the index of the TD basis vectors is the same, have a higher priority value as the index of the SD basis vectors increases when the indexes of the TD basis vectors and FD basis vectors are the same, and have a higher priority value as the layer index increases when the indexes of the TD basis vectors, FD basis vectors, and SD basis vectors are the same.

In each of the aspects of the present disclosure, the priority values of the NZCs with l denoting the layer index, i denoting the index of the SD basis vectors, f denoting the index of the FD basis vectors, and t denoting the index of the TD basis vectors may be determined by the following equation:

<Equation>

$$\mathrm{Pri}(l, i, f, t) = 2LvN_3 * \pi'(t) + 2 \cdot L \cdot v \cdot \pi(f) + v \cdot i + l$$

,

where u is the number of layers, 2L is the number of the SD basis vectors, $N_3$ is a value related to the number of FD basis vectors, and $\pi'(t)$ is a function transforming the index of the TD basis vectors.

In each of the aspects of the present disclosure, based on the uplink grant resource being smaller than a payload of the CSI, the UE may drop at least one of the NZCs in descending order of the priority values assigned to the plurality of NZCs.

In each of the aspects of the present disclosure, a maximum number of the NZCs per layer may be determined based on a product of the number of TD basis vectors, the number of FD basis vectors, the number of the SD basis vectors, and a constant greater than 0 and less than or equal to 1.

The above solutions are only some of the examples of the disclosure, and various examples reflecting the technical features of the disclosure may be derived and understood from the following detailed description by those skilled in the art.

[Advantageous Effects]

According to the disclosure, wireless signal transmission and reception may be efficiently performed in a wireless communication system.

It will be appreciated by persons skilled in the art that the technical effects that could be achieved with the disclosure are not limited to what has been particularly described hereinabove and the above and other technical effects that the disclosure could achieve will be more clearly understood from the following detailed description.

[Description of Drawings]

The accompanying drawings are provided to help understanding of the embodiment, along with a detailed description. However, the technical features of the embodiment are not limited to a specific drawing, and features disclosed in each drawing may be combined with each other to constitute a new embodiment. Reference numerals in each drawing denote structural elements:

FIG. 1 illustrates physical channels used in a 3rd generation partnership project (3GPP) system, which is an example of wireless communication systems, and a general signal transmission method using the same.
FIG. 2 illustrates a radio frame structure.
FIG. 3 illustrates a resource grid of a slot.
FIG. 4 illustrates exemplary mapping of physical channels in a slot;
FIG. 5 illustrates an exemplary process of transmitting a physical downlink shared channel (PDSCH) and an acknowledgment/negative acknowledgment (ACK/NACK).
FIG. 6 illustrates an exemplary physical uplink shared channel (PUSCH) transmission process.

FIG. 7 illustrates an example of a channel state information (CSI) related procedure.
FIG. 8 is a diagram for explaining a concept of artificial intelligence/machine learning (AI/ML)/deep learning.
FIGS. 9 to 12 illustrate various AI/ML models of deep learning.
FIG. 13 is a diagram for explaining a framework for 3GPP radio access network (RAN) intelligence.
FIGS. 14 and 15 illustrate examples of reporting precoding matrix indices (PMIs) for multiple time instances.
FIG. 16 is a flowchart illustrating an example of reporting CSI for multiple time instances according to embodiments of the present disclosure.
FIGS. 17 to 20 illustrate a communication system 1 and a wireless device applicable to the disclosure.

[Mode for Disclosure]

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

While the disclosure is described mainly in the context of 3GPP NR for clarity of description, the technical idea of the disclosure is not limited to 3GPP NR.

In the specification, the expression "setting" may be replaced with the expression "configure/configuration", and the two may be used interchangeably. In addition, conditional expressions (e.g., "if ~~", "in a case ~~", "when ~~", or the like) may be replaced with the expression "based on that ~~" or "in a state/status ~~". Further, an operation of a user equipment (UE)/base station (BS) or an SW/HW configuration according to the satisfaction of the condition may be inferred/understood. Further, when a process of a receiving (or transmitting) side may be inferred/understood from a process of the transmitting (or receiving) side in signal transmission/reception between wireless communication devices (e.g., a BS and a UE), its description may be omitted. For example, signal determination/generation/encoding/transmission on the transmitting side may be understood as signal monitoring reception/decoding/determination on the receiving side. In addition, when it is said that a UE performs (or does not perform) a specific operation, this may also be interpreted as meaning that a BS operates expecting/assuming that the UE performs the specific operation (or expecting/assuming that the UE does not perform the specific operation). In addition, when it is said that a BS performs (or does not perform) a specific operation, this may also be interpreted as meaning that a UE operates expecting/assuming that the BS performs the specific operation (or expecting/assuming that the BS does not perform the specific operation). In addition, the identification and index of each section, embodiment, example, option, method, plan, or the like in the following description are for the convenience of description, and should not be interpreted as meaning that each forms an independent disclosure or that each should be implemented individually. In addition, unless there is an explicitly conflicting/opposing description in describing each section, embodiment, example, option, method, plan, or the like, it may be inferred/interpreted as meaning that at least some of them may be implemented together in combination, or they may be implemented with at least some of them omitted.

In a wireless communication system, a UE receives information through downlink (DL) from a BS and transmit information to the BS through uplink (UL). The information transmitted and received by the BS and the UE includes data and various control information and includes various physical channels according to type/usage of the information transmitted and received by the UE and the BS.

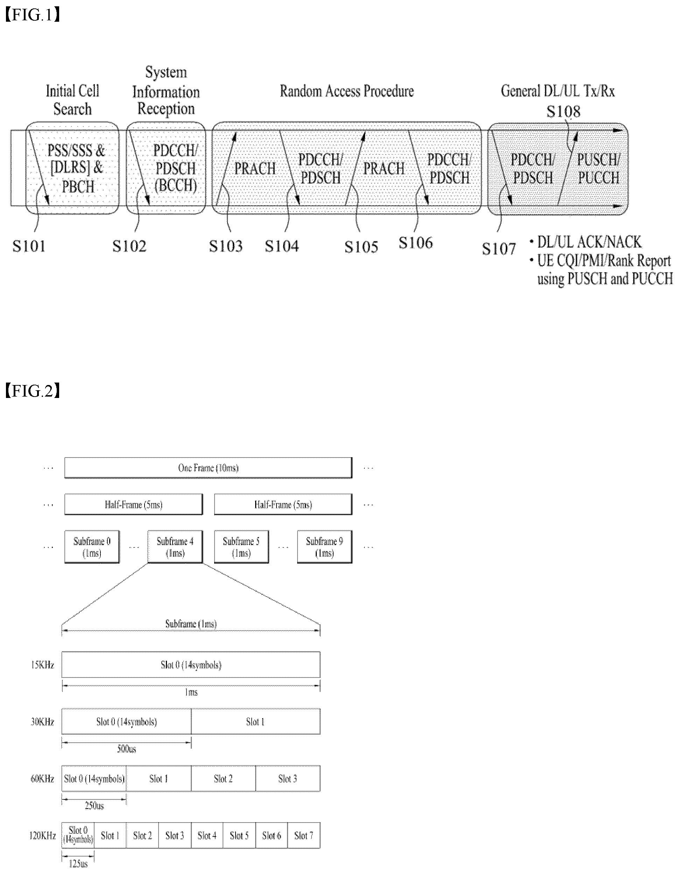

FIG. 1 is a diagram illustrating physical channels and a signal transmission method using the physical channels, in 3GPP NR system.

When powered on or when a UE initially enters a cell, the UE performs initial cell search involving synchronization with a BS in step S101. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS.

Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S102.

Subsequently, to complete connection to the eNB, the UE may perform a random access procedure with the eNB (S 103 to S 106). In the random access procedure, the UE may transmit a preamble on a physical random access channel (PRACH) (S103) and may receive a PDCCH and a random access response (RAR) for the preamble on a PDSCH associated with the PDCCH (S104). The UE may transmit a physical uplink shared channel (PUSCH) by using scheduling information in the RAR (S105), and perform a contention resolution procedure including reception of a PDCCH signal and a PDSCH signal corresponding to the PDCCH signal (S106).

After the above procedure, the UE may receive a PDCCH and/or a PDSCH from the eNB (S107) and transmit a Physical Uplink Shared Channel (PUSCH) and/or a Physical Uplink Control Channel (PUCCH) to the eNB (S108), which is a general DL and UL signal transmission procedure. Particularly, the UE receives Downlink Control Information (DCI) on a PDCCH. Control information transmitted from a UE to an eNB is collectively referred to as uplink control information (UCI). The UCI includes a hybrid automatic repeat and request acknowledgement/negative-acknowledgment (HARQ ACK/-NACK), a scheduling request (SR), channel state information (CSI), and so on. The CSI includes a channel quality indicator (CQI), a precoding matrix indicator (PMI), a rank indication (RI), and so on. Although the UCI is generally transmitted through a PUCCH, it may be transmitted through a PUSCH, when control information and traffic data should be transmitted simultaneously. In addition, the UCI may be transmitted aperiodically through a PUSCH by a request/indication of the network.

FIG. 2 illustrates the structure of a radio frame. The radio frame may be used for UL transmission and DL transmission in NR. A radio frame is 10 ms in length and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP). In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the ECP case.

[Table 2]

| u | $N^{slot}_{symb}$ | $N^{frame,u}_{slot}$ | $N^{subframe,u}_{slot}$ |
|---|---|---|---|
| 2 | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

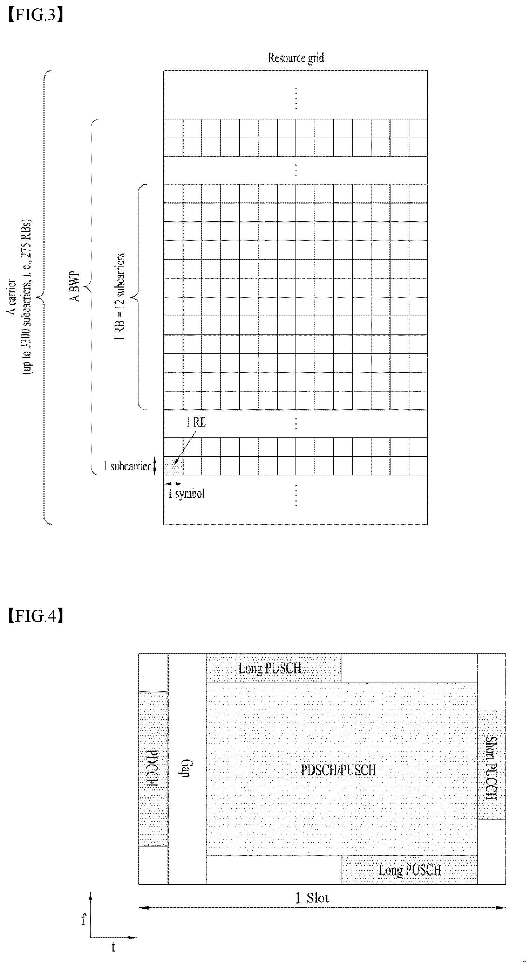

FIG. 3 illustrates an exemplary resource grid for the duration of a slot. A slot includes a plurality of symbols in the time domain. For example, one slot includes 14 symbols in a normal CP case, whereas one slot includes 12 symbols in an extended CP case. A carrier includes a plurality of subcarriers in the frequency domain. A resource block (RB) is defined as a plurality of (e.g., 12) contiguous subcarriers in the frequency domain. A bandwidth part (BWP) may be defined as a plurality of physical RBs (PRBs) in the frequency domain, and correspond to one numerology (e.g., an SCS, a CP length, or the like). A carrier may include up to N (e.g., 5) BWPs. Data communication may be performed in an active BWP, and only one BWP may be activated for one UE. Each element of a resource grid may be referred to as a resource element (RE) and mapped to one complex symbol.

FIG. 4 illustrates an example of mapping physical channels in a slot. A PDCCH may be transmitted in a DL control region, and a PDSCH may be transmitted in a DL data region. A PUCCH may be transmitted in a UL control region, and a PUSCH may be transmitted in a UL data region. A GP provides a time gap for switching from a transmission mode to a reception mode or switching from the reception mode to the transmission mode at the BS and the UE. Some symbols at a DL-to-UL switching time point within a subframe may be configured as a GP.

Each physical channel is described below in more detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to an aggregation level (AL). A CCE is a logical allocation unit used to provide a PDCCH with a specific code rate according to a wireless channel state. A CCE includes six resource element groups (REGs). An REG is defined as one OFDM symbol and one (P)RB. The PDCCH is transmitted in a control resource set (CORESET). A CORESET is defined as an REG set having a given numerology (e.g., an SCS, a CP length, and so on). A plurality of CORESETs for one UE may overlap with each other in the time/frequency domain. The CORESET may be configured by system information (e.g., a master information block (MIB)) or UE-specific higher layer (e.g., radio resource control (RRC) layer) signaling. Specifically, the number of RBs and the number (up to 3) of OFDM symbols included in the CORESET may be configured by higher layer signaling.

For PDCCH reception/detection, the UE monitors PDCCH candidates. A PDCCH candidate represents CCE(s) that the UE should monitor for PDCCH detection. Each PDCCH candidate is defined as 1, 2, 4, 8, or 16 CCEs according to an AL. The monitoring includes (blind) decoding of the PDCCH candidates. A set of PDCCH candidates that the UE monitors are defined as a PDCCH search space (SS). The SS includes a common search space (CSS) or a UE-specific search space (USS). The UE may acquire DCI by monitoring PDCCH candidates in one or more SSs configured by an MIB or higher layer signaling. Each CORESET is associated with one or more SSs, and each SS is associated with one COREST. The SS may be defined based on the following parameters.

- controlResourceSetId: Indicates a CORESET associated with the SS
- monitoringSlotPeriodicityAndOffset: Indicates a PDCCH monitoring periodicity (in slots) and a PDCCH monitoring period offset (in slots)
- monitoringSymbolsWithinSlot: Indicates PDCCH monitoring symbols (e.g., the first symbol(s) of the CORESET) within the slot
- nrofCandidates: AL={1, 2, 4, 8, 16} indicates the number of PDCCH candidates (one of 0, 1, 2, 3, 4, 5, 6, and 8)

* An occasion (e.g., time/frequency resources) in which the PDCCH candidates are to be monitored is defined as a PDCCH (monitoring) occasion. One or more PDCCH (monitoring) occasions may be configured within a slot.

Table 3 illustrates characteristics of each SS type.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |

(continued)

| Type | Search Space | RNTI | Use Case |
|---|---|---|---|
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., dynamic SFI) to the UE, and DCI format 2_1 may be used to deliver DL pre-emption information to the UE. DCI format 2_0 and/or DCI format 2_1 may be transmitted to UEs within a group through a group common PDCCH, which is a PDCCH delivered to UEs defined as a group.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH carries DL data (e.g., a DL-SCH transport block (DL-SCH TB)), and modulation schemes such as quadrature phase shift keying (QPSK), 16 quadrature amplitude modulation (16 QAM), 64 QAM, 256 QAM, or the like is applied to the PDSCH. A TB is encoded to generate a codeword. The PDSCH may carry up to two codewords. Each codeword may be subject to scrambling and modulation mapping, and modulation symbols generated from the codeword may be mapped to one or more layers. Each layer is mapped to resources along with a demodulation reference signal (DMRS)), generated as an OFDM symbol signal, and transmitted through a corresponding antenna port.

The PUCCH carries UCI. The UCI includes the following.

- SR (Scheduling Request): Information used to request UL-SCH resources

- HARQ(Hybrid Automatic Repeat reQuest)-ACK(Acknowledgement): A response to a DL data packet (e.g., codeword) on a PDSCH. This indicates whether the DL data packet has been successfully received. One HARQ-ACK bit may be transmitted in response to a single codeword, and two HARQ-ACK bits may be transmitted in response to two codewords. The HARQ-ACK response includes a positive ACK (simply, ACK), a negative ACK (NACK), DTX, or NACK/DTX. HARQ-ACK is used interchangeably with HARQ ACK/NACK and ACK/NACK.

- CSI (Channel State Information): Feedback information for a DL channel. Multiple input multiple output (MIMO)-related feedback information includes an RI and a PMI.

Table 5 illustrates an example of PUCCH formats. Depending on PUCCH transmission durations, they may be classified into short PUCCH (Formats 0 and 2) and long PUCCH (Formats 1, 3 and 4).

[Table 5]

| PUCCH format | Length in OFDM symbols NPUCCHsymb | Number of bits | Usage | Etc. |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 carries UCI of up to 2 bits, and is mapped to and transmitted based on a sequence. Specifically, the UE transmits one of a plurality of sequences through a PUCCH of PUCCH format 0 to transmit specific UCI to the BS. The UE transmits the PUCCH of PUCCH format 0 in PUCCH resources for a corresponding SR configuration, only when transmitting a positive SR.

PUCCH format 1 carries UCI of up to 2 bits, and modulation symbols are spread with an orthogonal cover code (OCC) (which is configured differently depending on whether frequency hopping is performed) in the time domain. ADMRS is transmitted in a symbol which does not carry modulation symbols (i.e., transmitted in time division multiplexing (TDM)).

PUCCH format 2 carries UCI of more than two bits, and modulation symbols are transmitted with a DMRS in frequency division multiplexing (FDM). The DMRS is located in symbol indexes #1, #4, #7 and #10 within a given RB with a density of 1/3. A pseudo noise (PN) sequence is used for a DMRS sequence. Frequency hopping may be activated for 2-symbol PUCCH format 2.

In PUCCH format 3, UEs are not multiplexed within the same PRB, and UCI with more than two bits is delivered. In other words, PUCCH resources of PUCCH format 3 do not include an OCC. A modulation symbol is transmitted with a DMRS in TDM.

PUCCH format 4 supports multiplexing of up to four UEs within the same physical RS and carries UCI with more than two bits. In other words, PUCCH resources of PUCCH format 3 include an OCC. A modulation symbol is transmitted with a DMRS in TDM.

At least one of one or more cells configured for the UE may be configured for PUCCH transmission. At least a primary cell may be configured as a cell for the PUCCH transmission. At least one PUCCH cell group may be configured for the UE based on the at least one cell configured for the PUCCH transmission, and each PUCCH cell group includes one or more cells. A PUCCH cell group may be simply referred to as a PUCCH group. The PUCCH transmission may be configured not only for the primary cell but also for an SCell, and the primary cell belongs to a primary PUCCH group, while the PUCCH-SCell configured for the PUCCH transmission belongs to a secondary PUCCH group. A PUCCH on the primary cell may be used for cells belonging to the primary PUCCH group, and a PUCCH on the PUCCH-SCell may be used for cells belonging to the secondary PUCCH group.

The PUSCH carries UL data (e.g., a UL-SCH TB) and/or UCI, and is transmitted based on a cyclic prefix-orthogonal frequency division multiplexing (CP-OFDM) waveform or a discrete Fourier transform-spread-orthogonal frequency division multiplexing (DFT-s-OFDM) waveform. When the PUSCH is transmitted based on the DFT-s-OFDM waveform, the UE transmits the PUSCH by applying transform precoding. For example, when transform precoding is impossible (e.g., transform precoding is disabled), the UE may transmit the PUSCH based on the CP-OFDM waveform, and when transform precoding is possible (e.g., transform precoding is enabled), the UE may transmit the PUSCH based on the CP-OFDM waveform or the DFT-s-OFDM waveform. PUSCH transmission may be dynamically scheduled by a UL grant in DCI or semi-statically scheduled based on higher layer (e.g. RRC) signaling (and/or layer 1 (L1) signaling (e.g. a PDCCH)). PUSCH transmission may be performed in a codebook-based or non-codebook-based manner.

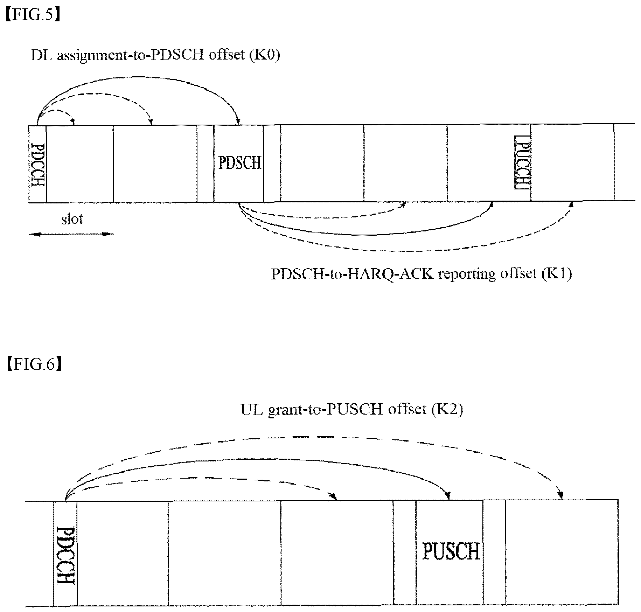

FIG. 5 illustrates an ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 or DCI format 1_1 may include the following information.

- Frequency domain resource assignment: Indicates an RB set assigned to a PDSCH.
- Time domain resource assignment: Indicates K0 (e.g., a slot offset), the starting position (e.g., OFDM symbol index) of a PDSCH in slot #n+K0, and the length (e.g., the number of OFDM symbols) of the PDSCH
- PDSCH-to-HARQ_feedback timing indicator: Indicates K1.
- HARQ process number (4 bits): Indicates HARQ process identify (ID) for data (e.g., PDSCH or TB)
- PUCCH resource indicator (PRI): Indicates a PUCCH resource to be used for UCI transmission among a plurality of PUCCH resources in a PUCCH resource set

Subsequently, the UE may receive a PDSCH from slot #(n+K0) according to scheduling information in slot #n. Upon completion of the PDSCH reception in slot #n1 (where n+K0≤n1), the UE may transmit UCI through a PUCCH in slot #(n1+K1). The UCI may include a HARQ-ACK response to the PDSCH. In FIG. 5, it is assumed for convenience that an SCS for the PDSCH and an SCS for the PUCCH are the same and slot# n1 = slot# n+K0, to which the disclosure is not limited. When the SCSs are different, K1 may be indicated/interpreted based on the SCS of the PUCCH.

When the PDSCH is configured to transmit up to one TB, the HARQ-ACK response may include one bit. When the PDSCH is configured to transmit up to two TBs, the HARQ-ACK response may include two bits in the case of not configuring spatial bundling, and include one bit in the case of configuring spatial bundling. When a HARQ-ACK transmission time for a plurality of PDSCHs is specified as slot #(n+K1), the UCI transmitted in slot #(n+K1) includes HARQ-ACK responses for the plurality of PDSCHs.

Whether the UE should perform spatial bundling for a HARQ-ACK response may be configured (e.g., by RRC/higher layer signaling) for each cell group. For example, spatial bundling may be individually configured for each HARQ-ACK response transmitted through a PUCCH and/or each HARQ-ACK response transmitted through a PUSCH.

When the maximum number of TBs (or codewords) receivable at one time (or schedulable by one DCI) in a corresponding serving cell is 2 (or larger) (e.g., when a higher layer parameter maxNrofCodeWordsScheduledByDCI corresponds to 2 TBs), spatial bundling may be supported. Meanwhile, more than 4 layers may be used for 2-TB transmission, and up to 4 layers may be used for 1-TB transmission. Consequently, when spatial bundling is configured for a corresponding cell group, spatial bundling may be performed for a serving cell for which more than 4 layers are schedulable among the serving cells of the cell group. On the serving cell, the UE that wants to transmit a HARQ-ACK response through spatial bundling may generate the HARQ-ACK response by performing a bitwise logical AND operation on A/N bits for a plurality of TBs.

For example, on the assumption that the UE receives DCI scheduling two TBs and receives the two TBs through a PDSCH based on the DCI, the UE performing spatial bundling may generate a single A/N bit by performing a logical AND operation on a first A/N bit for a first TB and a second A/N bit for a second TB. As a result, when both the first TB and the second TB are ACKs, the UE reports an ACK bit value to the BS, and when any one of the TBs is a NACK, the UE reports a NACK bit value to the BS.

For example, when only one TB is actually scheduled in a serving cell configured to receive two TBs, the UE may generate a single A/N bit by performing a logical AND operation on an A/N bit for the one TB and a bit value of 1. As a result, the UE reports the A/N bit for the one TB to the BS as it is.

There is a plurality of parallel DL HARQ processes for DL transmission in the BS/UE. The plurality of parallel HARQ processes allow DL transmission to be performed continuously while the BS waits for a HARQ feedback to successful or unsuccessful reception of a previous DL transmission. Each HARQ process is associated with a HARQ buffer of a medium access control (MAC) layer. Each DL HARQ process manages state variables such as the number of transmissions of a MAC physical data block (PDU) in a buffer, a HARQ feedback for the MAC PDU in the buffer, and a current redundancy version. Each HARQ process is identified by a HARQ process ID.

FIG. 6 illustrates an exemplary PUSCH transmission process. Referring to FIG. 6, the UE may detect a PDCCH in slot #n. The PDCCH may include UL scheduling information (e.g., DCI format 0_0 or DCI format 0_1). DCI format 0_0 and DCI format 0_1 may include the following information.

- Frequency domain resource assignment: Indicates an RB set allocated to a PUSCH.
- Time domain resource assignment: Specifies a slot offset K2 indicating the starting position (e.g., symbol index) and length (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

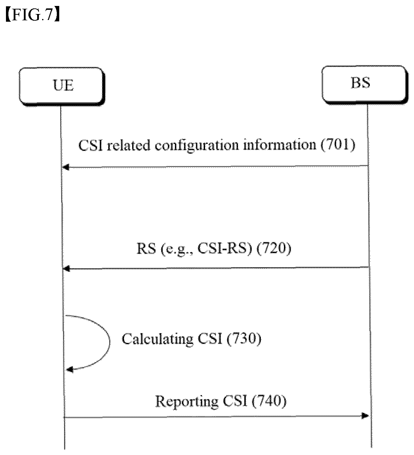

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.

- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).

- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.

- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

QCL (quasi-co location)

When the channel properties of an antenna port may be derived from a channel of another antenna port, the two antenna ports are quasi co-located. The channel properties may include one or more of delay spread, Doppler spread, frequency/Doppler shift, average received power, received timing/average delay, and spatial RX parameter.

The UE may be configured with a list of a plurality of TCI-State configurations through a higher layer parameter, PDSCH-Config. Each TCI-State is associated with a QCL configuration parameter between one or two DL RSs and a DMRS port of a PDSCH. QCL may include qcl-Type1 for a first DS RS and qcl-Type2 for a second DL RS. A QCL type may correspond to one of the following types.

- 'QCL-TypeA': {Doppler shift, Doppler spread, average delay, delay spread}

- 'QCL-TypeB': {Doppler shift, Doppler spread}

- 'QCL-TypeC': {Doppler shift, average delay}

- 'QCL-TypeD': {Spatial Rx parameter}

Beam Management (BM)

BM is a series of processes for acquiring and maintaining a set of BS (or transmission and reception point (TRP)) beams and/or UE beams available for DL and UL transmissions/receptions. BM may include the following processes and terminology.

- Beam measurement: The BS or the UE measures the characteristics of a received beamformed signal.
- Beam determination: The BS or the UE selects its transmission (Tx) beam/reception (Rx) beam.
- Beam sweeping: A spatial domain is covered by using Tx beams and/or Rx beams in a predetermined manner during a predetermined time interval.
- Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

The DL BM process may include (1) transmission of a beamformed DL RS (e.g., a CSI-RS or SSB) from the BS, and (2) beam reporting from the UE.

The beam report may include preferred DL RS ID(s) and reference signal received power (RSRP) corresponding to the DL RS ID(s). A DL RS ID may be an SSB resource indicator (SSBRI) or a CSI-RS resource indicator (CRI).

M-TRP (multi-transmission and reception point) transmission

NR Release 17 supports M-TRP PDCCH repeated transmission, M-TRP PDCCH/PDSCH SFN transmission, S-DCI-based M-TRP PUSCH repeated transmission, and single PUCCH resource-based M-TRP PUCCH repeated transmission.

In all of these transmission techniques, the same content (i.e., DCI, a UL TB, or UCI) is repeatedly transmitted with URLLC target enhancement for increased reliability. Repeated transmissions are performed in TDM or FDM in the case of M-TRP PDCCH repeated transmission, repeated transmissions are performed in the same time/frequency/layer in the case of M-TRP PDCCH/PDSCH SFN transmission, repeated transmissions are performed in TDM in the case of S-DCI-based M-TRP PUSCH repeated transmission, and repeated transmissions are performed in TDM in the case of single PUCCH resource-based M-TRP PUCCH repeated transmission.

- S-DCI-based M-TRP PDCCH repeated transmission

In NR Release 17, for M-TRP PDCCH repeated transmission, a plurality of CORESETs configured with different TCI states (i.e., different QCL RSs) are configured for the UE, and a plurality of SS sets connected to the CORESETs, respectively are configured. The BS indicates/configures linkage between an SS set connected to one CORESET and an SS set connected to another CORESET, for repeated transmission, to/for the UE, so that the UE may be aware that PDCCH candidates of the SS sets are repeatedly transmitted.

For example, two CORESETs, CORESET #0 and CORESET #1 may be configured for the UE and connected to SS sets #0 and #1, respectively, and SS set #0 and SS set #1 may be linked. The UE may be aware that the same DCI is repeatedly transmitted on a PDCCH candidate of SS set #0 and a PDCCH candidate of SS set #1, and through a specific rule, that the specific PDCCH candidate of SS set #0 and the specific PDCCH candidate of SS set #1 are a pair configured for repeated transmission of the same DCI. These two PDCCH candidates are referred to as linked PDCCH candidates, and when the UE successfully receives either of the two PDCCH candidates, the UE may successfully decode the DCI. However, when receiving the PDCCH candidate of SS set #0, the UE uses a QCL RS (i.e., DL beam) of the TCI state of CORESET #0 connected to SS set #0, and when receiving the PDCCH candidate of SS set #1, it uses a QCL RS (i.e., DL beam) of the TCI state of CORESET #1 connected to SS set #1, so that the UE receives the linked PDCCH candidates with different beams.

- M-TRP SFN PDCCH

As a special case of M-TRP PDCCH repeated transmission, multiple TRPs may repeatedly transmit the same DCI through the same time/frequency/DM-RS port, which may be called SFN PDCCH transmission. However, for SFN PDCCH transmission, the BS configures a plurality of TCI states for one CORESET rather than a plurality of CORESETs with different TCI states. When the UE receives a PDCCH candidate in an SS set connected to the one CORESET, it performs channel estimation on a PDCCH DM-RS and attempts to decode the PDCCH DM-RS using all of the plurality of TCI states.

- M-TRP SFN PDSCH

In the above M-TRP PDSCH repeated transmission, the two TRPs repeatedly transmit the corresponding channel in different resources. In a special case, however, when the two TRPs use the same resource, that is, even when the same channel is repeatedly transmitted in the same frequency, time, and layer (or DM-RS port), the reliability of the channel may be improved. In this case, the same channels that are repeatedly transmitted are combined on the air and received because their resources are not distinguished. Therefore, they are recognized as one channel from the receiver's perspective. In the NR standard, for PDSCH SFN transmission, two DL TCI states may be configured for PDSCH DM-RS reception.

- S-DCI-based M-TRP PUSCH repeated transmission

For S-DCI-based M-TRP PUSCH transmission, the BS configures two SRS sets for the UE, and the SRS sets are used to indicate UL transmission ports and UL beam/QCL information for TRP #1 and TRP #2, respectively. In addition, the BS may indicate SRS resources for the respective SRS sets by two SRI fields in one DCI, and indicate up to two power control (PC) parameter sets. For example, a first SRI field may indicate SRS resources and a PC parameter set defined for set 0, and a second SRI field may indicate SRS resources and a PC parameter set defined for set 1.

The UE receives the indication of a UL Tx port, a PC parameter set, and UL beam/QCL information for TRP #1 through the first SRI field, and performs PUSCH transmission in a TO corresponding to SRS set #0. Similarly, the UE receives the indication of a UL Tx port, a PC parameter set, and UL beam/QCL information for TRP #2 through the second SRI field, and performs PUSCH transmission in a TO corresponding to SRS set #1.

- M-TRP PUCCH repeated transmission based on single PUCCH resource

For M-TRP PUCCH transmission based on a single PUCCH resource, the BS activates/configures two spatial relation infos for the single PUCCH resource, for the UE, and when the UE transmits UCI in the PUCCH resource, the spatial relation infos are used to indicate spatial relation information for TRP #1 and TRP #2, respectively.

For example, the UE receives an indication of a Tx beam/PC parameter for TRP #1 through a value indicated by a first spatial relation info, and performs PUCCH transmission in a TO corresponding to TRP #1 using this information.

Similarly, the UE receives an indication of a Tx beam/PC parameter for TRP #2 through a value indicated by a second spatial relation info, and performs PUCCH transmission in a TO corresponding to TRP #2 using this information.

In the Rel 17 standardization meeting, a configuration method was enhanced so that two spatial relation infos may be configured for a PUCCH resource, for M-TRP PUCCH repeated transmission. That is, when a PC parameter is set in each spatial relation info, a spatial relation RS may be configured. As a result, PC information and spatial relation RS information corresponding to two TRPs may be configured through the two spatial relation infos, and the UE transmits UCI in TO 1 through a PUCCH using the first spatial relation info, and transmits the same UCI (i.e., CSI, ACKNAK, SR) in TO 2 through the PUCCH using the second spatial relation info.

Hereinafter, a PUCCH resource configured with two spatial relation infos is referred to as an M-TRP PUCCH resource, and a PUCCH resource configured with one spatial relation info is referred to as an S-TRP PUCCH resource.

Meaning of TCI state/beam indication

Using or mapping a specific TCI state (or TCI) when data/DCI/UCI is received in a certain frequency/time/spatial resource may mean that in DL, a channel is estimated from a DM-RS in the frequency/time/spatial resource, using a QCL type and QCL RS indicated by the DL TCI state, and data/DCI is received/demodulated based on the estimated channel.

In UL, it may mean that a DM-RS and data/UCI are transmitted/modulated in the frequency/time/spatial resource using a Tx beam and/or Tx power indicated by the UL TCI state.

A UL TCI state includes information about a Tx beam or Tx power for the UE, and the information may be configured for the UE by other parameters such as a spatial relation info, instead of the TCI state.

The UL TCI state may be directly indicated by DCI carrying a UL grant, or may mean a spatial relation info for an SRS resource indicated by an SRI field in the UL grant DCI. Alternatively, it may mean an open-loop Tx power control parameter linked to the value indicated by the SRI field in the UL grant DCI. Alternatively, a UL TCI may be indicated by the DL grant DCI.

Artificial intelligence/machine learning (AI/ML)

With the technological development of AI/ML, node(s) and UE(s) constituting a wireless communication network are becoming intelligent/advanced, and in particular, due to intelligence of a network/BS, it is expected that various network/BS determination parameter values (e.g., transmission and reception power of each BS, transmission power of each UE, precoder/beam of BS/UE, time/frequency resource allocation for each UE, or a duplex method of BS) are rapidly optimized and derived/applied according to various environmental parameters (e.g., distribution/location of BSs, distribution/location/material of building/furniture, location/moving direction/speed of UEs, and climate information). In line with this trend, many standardization organizations (e.g., 3GPP or O-RAN) consider introduction of the network/BS determination parameter values, and research on this is also actively underway.

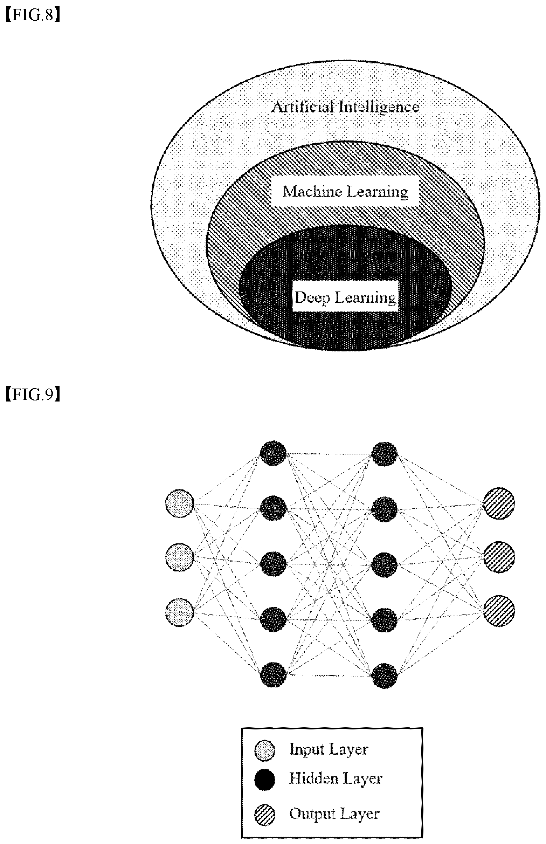

In a narrow sense, AI/ML may be easily referred to as deep learning-based artificial intelligence, but is conceptually shown in FIG. 8.

- Artificial intelligence: This may correspond to all automation by which machines replace a human work.
- Machine learning: Without explicitly programming rules, machines may learn patterns for decision-making on their own from data.
- Deep learning: This is an artificial neural network-based AI/ML model in which a machine performs all at once from unstructured data to feature extraction and determination and an algorithm depends upon a biological nervous system, that is, a multi-layer network of interconnected nodes for feature extraction and transformation inspired by a neural network. A common deep learning network architecture may include deep neural networks (DNNs), recurrent neural networks (RNNs) and convolutional neural networks (CNNs).

Classification of types of AI/ML according to various references

1. Offline vs Online

(1) Offline Learning: Offline Learning follows a sequential procedure of data collection, training, and prediction. In other words, collection and training are performed offline, and a completed program is installed on-site for use in prediction tasks. The offline learning approach is used in most situations.

(2) Online Learning: Online learning refers to a method that incrementally learns with newly generated data to gradually improve performance based on continuous generation of data available for learning through the Internet

2. Classification according to AI/ML Framework concept

(1) Centralized Learning: When training data collected from a plurality of different nodes is reported to a centralized node, all data resources/storage/learning (e.g., supervised, unsupervised, and reinforcement learning) are performed by one central node.

(2) Federated Learning: A collective AI/ML model is configured based on data across decentralized data owners. Instead of using data into an AI/ML model, a local node/individual device collects data and a train a copy of the AI/ML model thereof, and thus it is not required to report source data to a central node. In federated learning, a parameter/weight of the AI/ML model may be transmitted back to the centralized node to support general AI/ML model training. An advantage of federated learning includes increased computation speed and superiority in terms of information security. That is, a process of uploading personal data to a central server is unnecessary, and leakage and abuse of personal information may be prevented.

(3) Distributed Learning: The machine learning process represents a concept that is scaled and deployed across a cluster of nodes. A training AI/ML model is split and shared across multiple nodes operating concurrently to speed up AI/ML model training.

3. Classification according to learning method

(1) Supervised Learning: Supervised learning is a machine learning task that aims to learn a mapping function from input to output when a labeled data set is given. The input data is called training data and has known labels or outcomes. An example of the supervised learning may include (i) Regression: Linear Regression, Logistic Regression, (ii) Instance-based Algorithms: k-Nearest Neighbor (KNN), (iii) Decision Tree Algorithms: CART, (iv) Support Vector Machines: SVM, (v) Bayesian Algorithms: Naive Bayes, and (vi) Ensemble Algorithms: Extreme Gradient Boosting, Bagging: Random Forest. The supervised learning may be further grouped due to regression and classification problems, and classification predicts a label and regression predicts a quantity.

(2) Unsupervised Learning: This is a machine learning task that aims to learn a function that describes a hidden structure in unlabeled data. Input data is unlabeled and has no known results. Some examples of unsupervised learning include K-means clustering, principal component analysis (PCA), nonlinear independent component analysis (ICA), and LSTM.

(3) Reinforcement Learning: In reinforcement learning (RL), an agent aims to optimize a long-term goal by interacting with an environment based on a trial-and-error process, which is goal-oriented learning based on an interaction with the environment. Examples of an RL algorithm may include (i) Q-learning, (ii) Multi-armed bandit learning, (iii) Deep Q Network, State-Action-Reward-State-Action (SARSA), (iv) Temporal Difference Learning, (v) Actor-critic reinforcement learning, (vi) Deep deterministic policy gradient, and (vii) Monte-Carlo tree search. The RL may be further grouped into AI/ML model-based RL and AI/ML model-free RL. Model-based RL is an RL algorithm that uses a predictive AI/ML model to obtain transition probabilities between states using various dynamic states of the environment and an AI/ML model in which these states lead to rewards. Model-free RL is a value- or policy-based RL algorithm that achieves maximum future reward, which is less computationally complex in multi-agent environments/states and does not require accurate representation of the environment. The RL algorithm may also be classified into value-based RL versus policy-based RL, policy-based RL versus non-policy RL, and the like.

AI/ML models

FIG. 9 shows an example of a feed-forward neural network (FFNN) AI/ML model. Referring to FIG. 9, the FFNN AI/ML model includes an input layer, a hidden layer, and an output layer.

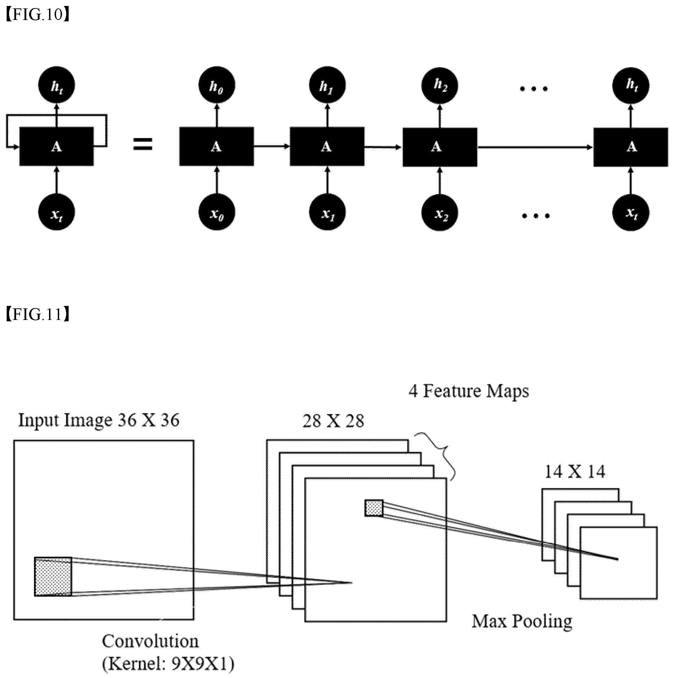

FIG. 10 illustrates a recurrent neural network (RNN) AI/ML model. Referring to FIG. 10, the RNN AI/ML model is a type of artificial neural network with a directed cycle, where hidden nodes are connected by directed edges, which is suitable for processing sequential data such as speech and text. One type of RNN is a long short-term memory (LSTM), which adds a cell state to the hidden state of the RNN. Specifically, in the LSTM, input gates, forget gates, and output gates are added to an RNN cell, along with a cell state.

FIG. 11 illustrates a convolutional neural network (CNN) AI/ML model. A CNN applies convolution operations, commonly used in image or video processing, to achieve two purposes: reducing the complexity of AI/ML models and extracting valuable features. Referring to FIG. 11, a kernel (or filter) refers to a unit/structure that applies weights to a specific range/unit of input. A stride refers to the movement range of a kernel within an input. A feature map refers to the result of applying a kernel to an input. Padding refers to a value added to adjust the size of a feature map. Pooling refers to an operation (e.g., max pooling, average pooling) used to downsample a feature map to reduce the size of the feature map.

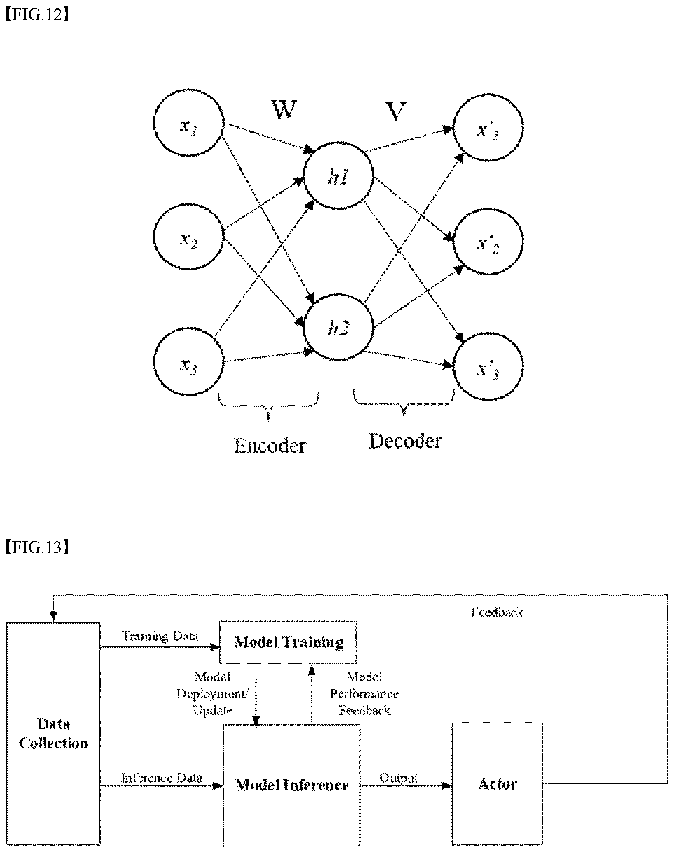

FIG. 12 illustrates an autoencoder AI/ML model. Referring to FIG. 12, an autoencoder is a neural network that receives a feature vector x as an input and outputs the same vector or a similar vector x'. The autoencoder has the characteristic that input and output nodes are the same and is a type of unsupervised learning.

FIG. 13 is a diagram for explaining a framework for 3GPP radio access network (RAN) intelligence.

The following terms related to AI/ML can be defined (refer to 3GPP TS37.817):

- Data Collection: Data collection refers to data gathered from network nodes, management entities, or UEs, which serves as the foundation for AI/ML model training, data analysis, and inference.
- ML Model: An ML model is a data-driven algorithm that generates a set of outputs consisting of predicted information based on a set of inputs by applying ML techniques.
- ML Training: ML training is an online or offline process of training an AI/ML model by learning features and patterns that best represent data and obtaining the trained AI/ML model for inference.
- ML Inference: ML Inference is a process of using a trained AI/ML model to make predictions or guide decisions based on collected data and the AI/ML model.

Referring to FIG. 13, data collection is a function that provides input data for AI/ML model training and inference. Data preparation for each AI/ML algorithm (e.g., data preprocessing, cleaning, formatting, and transformation) is not performed in the data collection function.

Examples of input data may include measurements from a UE or other network entities, feedback from actors, and outputs of an AI/ML model. Training data refers to input data required for the AI/ML model training function. Inference data is input data required for the AI/ML model inference function.

AI/ML model training is a function that performs training, validation, and testing of AI/ML models as part of an AI/ML model testing procedure and generates performance metrics for the AI/ML models. If necessary, he AI/ML model training function may handle data preparation (e.g., data pre-processing, cleaning, forming, and transformation) based on the training data provided by the data collection function.

AI/ML model deployment/update: AI/ML model deployment/update is used to initially deploy a trained, validated, and tested AI/ML model to the AI/ML model inference function or to provide an updated AI/ML model to the AI/ML model inference function.

Model inference is a function that provides AI/ML model inference outputs (e.g., predictions or decisions). In some cases, the AI/ML model inference function may provide performance feedback to the AI/ML model training function. If necessary, the AI/ML model inference function may also perform data preparation (e.g., data preprocessing, cleaning, formatting, and transformation) based on the inference data provided by the data collection function. An output refers to the inference output of the AI model generated by the AI/ML model inference function. AI/ML model performance feedback may be used to monitor the performance of the AI/ML model.

An actor is a function that receives the output of the AI/ML model inference function and triggers or performs related operations. The actor may trigger tasks directed toward other entities or the actor itself. Feedback refers to information that may be necessary to derive training data, inference data, or performance feedback.

Data set

Data used in AI/ML may include at least one of the following: AI/ML model training data, validation data, or test data.

AI/ML model training data refers to a dataset used for training an AI/ML model.

Validation data is a dataset used to validate an AI/ML model after training is complete. The validation data may be used to prevent overfitting of the AI/ML model training dataset. The validation data may also serve as a dataset for selecting the best model among various AI/ML models trained during the training process. Thus, the validation data may also be considered a type of learning.

Test data is a dataset used for final evaluation and may be independent of training.

For example, AI/ML model training data and validation data may be used in a ratio of approximately 8:2 or 7:3. If test data is also considered, a ratio of 6:2:2 (training: validation: test) may be used.

Collaboration level

For example, collaboration levels may be defined as follows, depending on the capability of the AI/ML functions between the BS and UE. Modifications through combinations or separations of the following levels may also be possible.

Cat 0a) No collaboration framework: An AI/ML algorithm is implemented but does not require changes to a wireless interface.

Cat 0b) A modified wireless interface is provided to implement a more efficient AI/ML algorithm.

Cat 1) Collaboration between nodes is possible to improve the AI/ML algorithm of each node. The UE may receive assistance from the BS or provide assistance to the BS for training, adaptation, etc. However, the exchange of AI/ML model information between network nodes is not required.

Cat 2) As a joint AI/ML operation between the UE and BS, indications/exchanges between network nodes are required.

Time Domain (TD) Compression Codebook

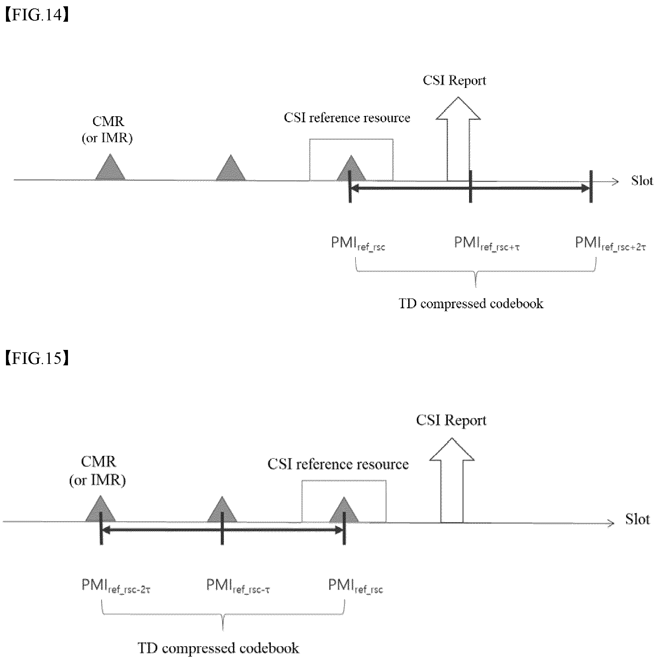

FIGS. 14 and 15 illustrate examples of reporting precoding matrix indices (PMIs) for multiple time instances.

In particular, $PMI_{ref\_rsc}$, $PMI_{ref\_rsc+\tau}$ and $PMI_{ref\_rsc+2\tau}$ shown in FIGS. 14 and 15 are compressed based on a TD compression codebook to reduce PMI feedback overhead.

To determine the time instances of a channel represented by a PMI, the BS may perform the following signaling to the UE as shown in FIGS. 14 and 15. For example, the signaling may be provided as parameters for a codebook configuration through RRC signaling.

First, the number of time instances to be represented by the PMI is indicated. In the examples of FIGS. 14 and 15, the number of time instances is 3. The number of time instances may be configured in consideration of the time variability of the channel. To this end, the UE may report information on the speed thereof, Doppler information (Doppler shift/spread), etc., to the BS. Alternatively, the UE may report a preferred number of time instances to the BS based on the speed thereof or Doppler information, and the BS may confirm or make the final selection. The UE may report candidate values for the number of time instances as a UE capability.

Additionally, the value of $\tau$, which represents an interval between time instances, may be indicated as shown in FIGS. 14 and 15. The value of T may be configured considering the time variability of the channel, and for this purpose, the UE may report information on the speed thereof, Doppler information (Doppler shift/spread), etc., to the BS. Alternatively, the UE may report a preferred value of T to the BS based on the speed thereof or Doppler information, and the BS may confirm or make the final selection. The value of T may be expressed as an absolute time, slots, OFDM symbols, etc. The UE may report candidate values for the value of T as a UE capability.

A CSI reference resource may be used to indicate which time instance among the configured time instances the corresponding time instance corresponds to.

In FIG. 14, a CSI reference resource is configured on the first time instance among three time instances. To this end, the BS may configure a time instance offset for the CSI reference resource to 0. Since the CSI reference resource is configured on the first time instance, the remaining time instances after the first time instance are configured behind the CSI reference resource. In FIG. 15, a CSI reference resource is configured on the last (third) time instance among three time instances. To this end, the BS may configure a time instance offset for the CSI reference resource to 2. Since the CSI reference resource is configured on the third time instance, the remaining time instances before the last (third) time instance are configured prior to the CSI reference resource.

The time instance offset may be configured considering the time variability of the channel, and for this purpose, the UE may report information on the speed thereof, Doppler information (Doppler shift/spread), etc., to the BS. Alternatively, the UE may report a preferred time instance offset to the BS based on the speed thereof or Doppler information, and the BS may confirm or make the final selection. Additionally, depending on the UE implementation, UEs are classified into two types: a UE capable of configuring the time instance offset on time instances other than the last time instance as shown in FIG. 14; and a UE capable of configuring the time instance offset may only on the last time instance as shown in FIG. 15, which may be reported as a UE capability. The latter is simpler to implement because no channel prediction is required, while the former is more complex because channel prediction is required..

More specifically, in the case of the former, the minimum value of a configurable time instance offset or candidates for the configurable time instance offset may be additionally reported. The smaller the minimum value, the more channel prediction needs to be performed, which increases the complexity of the UE implementation.

<Methods for reducing CSI overhead>

In the method of reporting PMI for multiple time instances described with reference to FIGS. 14 and 15 above, when the uplink resource (e.g., PUCCH resource/PUSCH resource) for CSI reporting is set smaller than the CSI payload, PMI feedback overhead reduction needs to be performed.

    1. As a first feedback overhead reduction method, PMIs for multiple time instances may be reported with different accuracies.

(1) First, when reporting one W1 commonly applied to multiple time instances without time domain (TD) compression and multiple W2 corresponding to each of the multiple time instances, the following methods in a) to c) may be considered.

(1)-(a) W2 reporting for specific time instance(s) may be omitted. The specific time instances may be odd-numbered time instances (or even-numbered time instances) or the most recent time instances (e.g., the most recent N/2 time instances among N time instances) or other remaining time instances.

Alternatively, the specific time instances may be time instances until the CSI payload can be transmitted on a UL resource when W2 is omitted in reverse chronological order (i.e., L-1, L-2, ...) starting from the most recent time instance L. Conversely, they may refers to time instances until the CSI payload can be transmitted on a UL resource when W2 is omitted starting from the first time instance in chronological order (i.e., the second time instance, the third time instance,...).

In the case where UL resources are insufficient W2 for only a single time instance (e.g., W2 calculated by the conventional method based on existing CSI reference resources) is reported.

(1)-(b) Instead of omitting W2 reporting for specific time instances, the payload size may be reduced by adjusting the parameters of W2 for the specific time instances.

For example, the granularity of the amplitude of the non-zero coefficient (NZC) may be reduced (i.e., the number of bits for amplitude representation may be reduced), the granularity of the phase of the NZC may be reduced (e.g., the number of bits may be reduced by reducing the phase from 16 PSK to 8 PSK), the number of NZCs may be reduced, or the upper limit $K_0$ of the number of NZCs may be reduced. Additionally, some NZCs may be omitted from CSI reporting (e.g., NZCs with small amplitude values may be omitted from CSI reporting), or the number M of frequency domain (FD) basis vectors may be reduced. Thereby, the payload of W2 may be reduced.

Alternatively, the number of layers for a specific time instance may be reduced to reduce the payload of W2 for reporting. For example, when RI=2 is determined and PMI is reported for t1, t2, and t3, W2 for RI=2 should be reported at each time instance. However, the payload may be reduced by omitting W2 reporting for a specific layer of the specific time instance.

Suppose W2 for t1, t2, and t3 is represented as W2(t1), W2(t2), and W2(t3), respectively. When RI is 2, W2(t1), W2(t2), W2(t3) should calculate/report PMI for 2 layers, 2 layers, and 2 layers, respectively. This scheme may be represented as 2-2-2. In this case, when UL resources are insufficient, CSI omission may be performed in order of 2-2-1 -> 2-1-1 -> 1-1-1 -> 1-1-0 -> 1-0-0 -> 0-0-0. Alternatively, CSI omission may be performed in order of 2-2-2 -> 2-2-1 -> 2-2-0 -> 2-1-0 -> 2-0-0 -> 1-0-0 -> 0-0-0.

(1)-(c) As a combination of (1)-(a) and (1)-(b) described above, when UL resources are still insufficient after performing the method in (1)-(b), the method in (1)-(a) may be applied to omit W2 reporting. Alternatively, when UL resources are still insufficient after applying the method in (1)-(a), the method in (1)-(b) may be applied to the remaining W2 that has not been omitted to reduce the payload for reporting.

(2) Next, when a TD compressed codebook, PMIs for multiple time instances is represented in a single codebook. That is, PMIs for multiple time instances are represented at once as a linear combination of TD basis vectors. For example, since the number of time instances is equal to the number of TD basis vectors, time instances 0 to 3 are represented as a linear combination of length-4 TD basis vectors, and the i-th element of the linearly combined TD basis vector represents the PMI for the i-th time instance. In this case, the methods in (1)-(a) to (1)-(c) described above may be extended and applied as follows.

(2)-(a) The method in (1)-(a) may be extended for the TD compressed codebook. PMI reporting for a specific time instance may be omitted, and the time instance may be excluded from the TD basis vector. For example, when length-4 TD basis vectors are configured for time instances 0 to 3, and the PMI for even-numbered time instances is omitted from the CSI report, length-2 TD basis vectors should be used for time instances 1 and 3.

The number of TD basis vectors, N, is proportional to the length of the TD basis vectors (for example, N is TD basis vector length/4), and N decreases as the length of the TD basis vectors (i.e., the number of time instances) decreases. As N decreases, the PMI payload is reduced as follows.

Specifically, NZCs are selected as a bitmap of 2L*M*N bits per layer, 2L is the number of spatial-domain (SD) basis vectors, M is the number of frequency-domain (FD) basis vectors, and N is the number of TD basis vectors. In this case, as N decreases, the bitmap size per layer decreases. Additionally, the upper limit $K_0$ of KNZ (i.e., the number of NZCs) per layer may be determined in proportion to 2L*M*N (e.g., $K_0$=2L*M*N/8). As N decreases, $K_0$ may decrease, and thus KNZ may be reduced. Since the amplitude and phase should be reported for each NZC, a reduction in KNZ, which is the number of NZCs, reduces the PMI payload.

(2)-(b) The methoed in (1)-(b) may be extended for the TD compressed codebook. The payload may be reduced for reporting by adjusting the parameter of the PMI for a specific time instance. For example, to reduce the payload of W2, the granularity of the amplitude of the NZC (i.e., the number of bits for amplitude representation) may be reduced, the granularity of the phase of the NZC may be lowered (e.g., from 16PSK to 8PSK), the number of NZCs may be reduced, the upper limit $K_0$ of the number of NZCs may be reduced, some NZCs (e.g., NZCs with small amplitude values) may be omitted from the CSI report, or the number M of frequency domain (FD) basis vectors may be reduced.

Alternatively, the time instances for which PMI needs to be reported may be configured differently for each layer. For example, when RI is 4, the first layer may report PMIs for all time instances (in this case, the TD compressed codebook may or may not be applied, and W2 may be reported for each time instance), the second layer may report PMIs for even-numbered time instances, the third layer may report PMIs for even-numbered time instances among those reported by the second layer (i.e., the third layer performs CSI reporting for only half of the time instances of the second layer), and the fourth layer may report PMIs for even-numbered time instances among those reported by the third layer. Alternatively, the third and fourth layers may report PMI for the same time instances as the second layer.

Alternatively, the first layer may report PMIs for all time instances, the second layer may report PMIs for the first half of the time instances in chronological order, the third layer may report PMIs for the first quarter of the time instances in chronological order, and the second layer may report PMIs for the first eighth of the time instances in chronological order.

(2)-(c) As a combination of (2)-(a) and (2)-(b) described above, when UL resources are still insufficient after performing the method in (2)-(b), the method in (2)-(a) may be applied to omit W2 reporting. Alternatively, when UL resources are still insufficient after applying the method in (2)-(a), the method in (2)-(b) may be applied to the remaining W2 that has not been omitted to reduce the payload for reporting.

2. As a second feedback overhead reduction method, the reporting of non-zero coefficients (NZCs) for specific TD basis vectors may be omitted when when a TD compressed codebook is used.

Specifically, the conventional process of omitting NZCs in the FD compressed codebook may be applied to the TD compressed codebook. First, the conventional process of omitting NZCs in the FD compressed codebook will be described first, and then the proposed method will be described.

In the conventional CSI omission method, the payload size may be reduced by omitting NZC reporting for a specific FD basis vector using type II codebook according to Equation 1 below, which described in 3GPP 38.314 section 5.2.3.

[Equation 1]

$$\mathrm{Pri}(l, i, f) = 2 \cdot L \cdot v \cdot \pi(f) + v \cdot i + l$$

According to Equation 1 above, for the NZCs of specific FD beams, that is, according to $\pi(f)$, FD beams far from the FD beam with index 0 according to $\pi(f)$, greater values of Pri(l,i,t) may be calculated than for the NZCs of other FD beams. As Pri(l,i,t) increases, the priority is lowered. Accordingly, the NZCs of the specific FD beams are omitted first during the NZC reporting. The NZCs for the same FD beam have lower priority as the SD beam index increases. The NZCs for the same FD beam and the same SD beam have lower priority as the layer index increases. Here, the SD beam and FD beam refer to the SD basis vector and FD basis vector, respectively.

In the following proposed scheme, Equation 1 is modifed to determine the priorities of NZCs may be determined based on not only the FD basis vector index f, SD basis vector index i, and layer index l, but also the TD basis vector index t, that is, the TD beam index. Here, u is the number of layers, and 2L is the number of SD basis vectors.

2-(1) First, the priorities of NZCs may be determined according to Equation 2 below.

[Equation 2]

$$\mathrm{Pri}(l, i, f, t) = \boldsymbol{2LvN_3 * \pi'(t)} + 2 \cdot L \cdot v \cdot \pi(f) + v \cdot i + l \quad,$$

Where $\upsilon$ is the number of layers, 2L is the number of SD basis vectors, $N_3$ is a value related to the number of FD basis vectors, and $\pi'(t)$ is a function that determines the priority for the t-th TD basis vector, where t is 0, 1, 2,..., N-1, and N is the number of TD basis vectors. More simply, $\pi'(t)$ may be a function that maps t 1:1 to an integer among 0, 1, 2,..., and N-1.

For example, when t is mapped 1:1 to t, the leading TD basis vectors have a higher priority than the trailing TD basis vectors. Conversely, when t = 0, 1, 2,..., N-1 are mapped 1:1 to N-1, N-2, N-3,..., 0, respectively, the trailing TD basis vectors have a higher priority than the leading TD basis vectors. Alternatively, when t is mapped to a smaller value when it is even than when it is odd. For each of even values and odd values of t, the leading TD basis vectors may be mapped to smaller (or larger) values. In this case, TD basis vectors with even indexes have higher priority.

Alternatively, $\pi'(t)$ may be a function that maps t to integers in the range of 0 to $N_4-1$. That is, it may be expressed as $\pi'(t)=t$. $N_4$ is the number of time instances, which is equal to the length of the TD basis vector, and N TD basis vectors may be created by by selecting N vectors from a DFT matrix of size $(N_4 \times N_4)$.

To simplify this configuration, as Pri(l,i,f,t) increases, priority decreases. Thus, NZCs for a specific TD beam are omitted first from NZC reporting. For NZCs for the same TD beam, priority of decreases as the FD beam index increases.

For NZCs for the same TD beam and same FD beam, priority decreases as the SD beam index increases. For NZCs for the same TD beam, same FD beam, and same SD beam, priority decreases as the layer index increases. Here, the SD beam and FD beam refer to the SD basis vector and FD basis vector.

Although $\pi$'(t) is assumed to be a simple permutation method, the permutation method may change depending on factors such as the movement speed and direction of a UE. Multiple permutation methods may be pre-configured, and an indicator indicating which permutation method is used may be considered as a new feedback parameter. Alternatively, the permutation information may be provided using combinatorial numbers.

Based on the priority of NZCs determined by Equation 2, a group of NZC values (i.e., amplitude and/or phase) may be determined, and each group includes a bitmap for the NZCs belonging to the group (i.e., a bitmap that distinguishes between NZCs and ZCs among the 2L*M*N coefficients). For example, based on priority, half of the NZCs with higher priority are determined as group 1, and the remaining NZCs as group 2. When NZCs are omitted for all TD basis vectors, PMI may be reported using the existing codebook for a single time instance (e.g., the existing CSI reference resource slot), and the CSI payload may be determined by applying the existing CSI omission rules for the codebook.

2-(2) Next, the priority of NZCs may be determined according to Equation 3 below.

[Equation 3]

$$\mathrm{Pri}(l, i, f, t) = N \cdot 2 \cdot L \cdot v \cdot \pi(f) + \mathbf{2 \cdot L \cdot v \cdot \pi'(t)} + v \cdot i + l$$

$\pi$'(t) is the same as defined in Equation 2. However, Equation 3 reverses the order of application of the priority of the FD basis vector and the priority of the TD basis vector, which correspond to f and t in Equation 2.

In other words, in Equation 2, the priority of the NZCs is first determined by the TD basis vector, and then by the FD basis vector for the same TD basis vector. On the other hand, in Equation 3, the priority of the NZCs is first determined by the FD basis vector, and then by the TD basis vector for the same FD basis vector.

In Equation 3, $\pi$'(t) is assumed to be a function that outputs a value between 0 and N-1. When $\pi$'(t) is a function that outputs a value between 0 and $N_4$-1, N should be changed to $N_4$ in Equation 3.

When NZCs are omitted for all FD basis vectors, PMI is reported using the WB codebook instead of the FD compressed codebook, and the CSI omission process may be applied by setting $\pi$(f) to 0 in Equation 3 for the WB codebook. That is, WB PMI may be reported for multiple time instances using the TD compressed codebook. When the UL resources are insufficient, the NZCs of TD basis vectors with lower priority may be omitted first. In the case where the NZCs of both the FD basis vectors and the TD basis vectors are all omitted, PMI may be reported using the existing WB codebook for a single time instance (e.g., the existing CSI reference resource slot).

2-(3) When the existing rule of Equation 1 is used, there may be multiple NZCs with the same priority because Equation 1 does not consider TD basis vectors. Therefore, a method is proposed to determine the priority within multiple NZCs with the same priority using the index of the TD basis vector.

For example, assuming that $\pi$(f), f, i, and l in Equation 1 are the same, and thus that there are three NZCs with the same priority, and the NZCs are coefficients for TD basis vector 1 to TD basis vector 3, respectively, the priorities of the 3 NZCs may be determined according to the priorities of the TD basis vectors determined using $\pi$' described in 2-(1) above.

After the priorities are determined in this way, half of the NZCs with higher priority may be grouped into group 1, and the remaining NZCs into group 2, as in the conventional method.

Additionally, some NZCs of the TD basis vector may be set to 0 (i.e., omitted), and the proposal of 2-(3) may be applied. That is, when the UL resources are insufficient, some TD basis vectors corresponding to the NZCs may be selected, and the NZCs of these TD basis vectors may be omitted first, and then the proposal of 2-(3) may be applied. The selection of some TD basis vectors may be determined based on even-numbered TD basis vectors (or even-numbered TD basis vectors), the first half of the TD basis vectors (or the second half of the TD basis vectors), or TD basis vectors with smaller amplitudes of coefficients.

2-(4) The priorities may be applied by combining Equations 2 and 3. For example, half (or some) of the NZCs with lower priority may be omitted by applying Equation 2 first. Then, when the UL resources are still insufficient, Equation 3 may be appied to the remaining NZCs to omit half (or some) of the NZCs with lower priority. Through this process, NZCs for some lower priority TD basis vectors may be omitted first, and then NZCs for some lower priority FD basis vectors may be omitted. Of course, Equation 3 may be applied first to omit some NZCs, and then Equation 2 may be applied.

The BS may specify, for the UE, which of Equations 1 to 3 is to be used to apply the NZC omission.

3. As a third feedback overhead reduction method, when the TD compressed codebook is used, it is proposed to reduce PMI feedback overhead by setting the upper limit of the number of NZCs, $K_0$, to a small value.

In the existing Type II codebook, the upper limit of the number of NZCs set to be no more than $K_0$=2L*M*beta per layer. Here, beta is a constant greater than 0 and less than or equal to 1.

In the TD compressed codebook, 2L*M*N coefficients (NZCs or ZCs) per layer are defined by the number of TD basis vectors, N. When the upper limit $K_0$ of the number of NZCs per layer is determined as 2L*M*N*beta based on the definition above, the overhead may increase excessively as the value of N increases. To reduce the increase in overhead, beta may be set to a less value as N increases. For example, when TD compression is not used, N=1 may be set and the existing value of beta may be applied in $K_0=2L*M*N*beta$. On the other hand, when TD compression is used, i.e., when N>1, a value less than the existing beta value may be applied.

Alternatively, the beta value may be kept the same, but a value of alpha may be added to perfrom a similar operation. For example, $K0=2L*M*N*beta*alpha$ may be determined. In this case, when TD compression is not used, N=1 may be set, the existing beta value may be applied, and alpha=1 may be set. When TD compression is used, i.e., when N>1, the existing beta value may be used, and a value of alpha less than 1 may be applied. Then, alpha may be set to a less value as N increases.

Additionally, the current 3GPP NR standard limits the sum of the number of NZCs of all layers not to exceed $2K_0$ to prevent the excessive increase in the number of NZCs as the rank increases. In the case where the TD compressed codebook is used, this restriction may be set more strictly. For example, the sum of the number of NZCs of all layers may be limited not to exceed $m*K_0$ (for example, m<2 and m is set to 1 (m=1)).

When reporting one W1 commonly applied to multiple time instances without TD compression and multiple W2 corresponding to each of the multiple time instances, different values of beta may be applied to the multiple time instances, respectively, to adjust the feedback payload. Specifically, for one slot (e.g., the existing CSI reference resource slot) among the multiple time instances, a greater value of beta may be applied, and less values may be applied to the other time instances to reduce the number of NZCs. Alternatively, greater values of beta may be applied to earlier time instances or to later time instances in chronological order. Since CSI calculation for future time instances may be inaccurate, it is preferred to reduce beta.

4. According to the existing technology, the BS may configure a codebook subset restriction (CBSR) to prevent the UE from reporting specific PMIs. For example, the BS may configure restrictions on the SD beams that the UE may report for interference management, and configure amplitude (or power) restrictions for specific SD beam(s).

As a fourth feedback overhead reduction method, it is proposed to configure a different CBSR for each time instance when PMIs for multiple time instances are reported. This is intended to allow the BS to manage interference differently for each time instance.

For example, to avoid performing DL transmission using SD beams 0 and 1 at t1 and avoid performing DL transmission using SD beams 1 and 2 at t2, the BS may configure the UE such that the UE does not report SD beams 0 and 1 at t1 and does not report SD beams 1 and 2 at t2. More specifically, the BS may set the maximum allowed average amplitude at t1 and the maximum allowed average amplitude at t2. The maximum allowed average amplitude may be replaced by the maximum allowed average power.

In addition to limiting SD beams and/or power for each time instance, TD basis vectors may be restricted. Applying the restriction on the TD basis vectors to all SD beams may be excessive, and therefore it may be operated in conjunction with specific SD beams. For example, for SB beam set 1, TD basis vectors 0 to 3 may be restricted from being used. For SB beam set 2, TD basis vectors 4 to 7 may be restricted from being used.

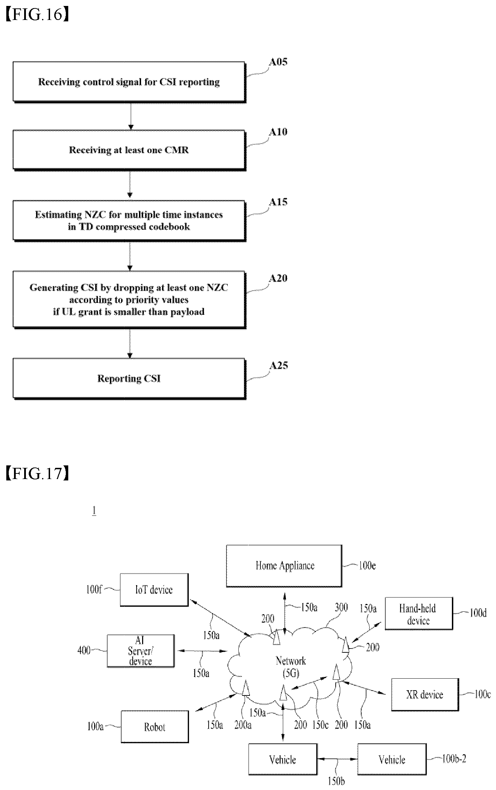

FIG. 16 is a flowchart illustrating a method of reporting CSI for multiple time instances according to embodiments of the present disclosure.

Referring to FIG. 16, in operation A05, a UE receives a control signal for CSI reporting from a BS. The control signal may include information on a channel measurement resource (CMR) and/or UL grant-related information for reporting the CSI.

Next, in operation A10, the UE receives at least one CMR from the BS based on the control signal. In operation A15, the UE estimates, based on the at least one CMR, at least one precoding matrix index (PMI), i.e., a codeword, related to at least one time instance from the TD compressed codebook. In other words, the UE estimates multiple NZCs constituting the codeword. However, the maximum number of NZCs per layer is determined based on the product of the number of TD basis vectors, the number of FD basis vectors, and the number of SD basis vectors.

When the UL grant resource is smaller than the payload of the CSI including the estimated NZCs, the UE may drop the NZCs in descending order of the priority values assigned to the NZCs in operation A20 to configure the CSI.

Specifically, the multiple NZCs have priority values determined in order of an index of TD basis vectors, an index of FD basis vectors, an index of SD basis vectors, and a layer index.

In this case, the multiple NZCs have higher priority values as the index of the TD basis vectors increases. When the index of the TD basis vectors is the same, the NZCs may have higher priority values as the index of the FD basis vectors increases. When the index of the TD basis vectors and the index of the FD basis vectors are the same, the NZCs may have higher priority values as the index of the SD basis vectors increases. When the index of the TD basis vectors, the index of the FD basis vectors, and the index of the SD basis vectors are the same, the NZCs may have higher priority values as the layer index increases.

More specifically, the priority values of the NZCs (Pri(l,i,f,t)) with l denoting the layer index, i denoting the index of the SD basis vectors, f denoting the index of the FD basis vectors, and t denoting the index of the TD basis vectors may be determined by Equation 2 above.

Finally, in operation A25, the UE transmits the CSI including information about the NZCs to the BS based on the UL grant.

In the proposals above, the CSI may be reported for multiple time instances when one CMR set for CSI calculation bursts consecutively for a short time interval (e.g., every slot or every symbol), a TD compressed codebook is configured for PMI reporting, one W1 and multiple W2 corresponding to different time instances are configured to be reported for PMI reporting, or multiple time instances/multiple CSI reference resources are configured.

Although the proposals describe methods of reducing payload using PMI as an example, they may be extended and applied to other CSI, such as CQI.

The proposals may be combined/applied together for final implementation.

Although the proposal methods are described based on the TD compressed codebook as an example, the proposed methods may be extended and applied to the Doppler domain (DD) compressed codebook.

The proposals may be used as methods to reduce CSI payload size as well as methods for CSI omission. While CSI omission may be performed when the UL resource for CSI reporting (e.g., PUCCH resource/PUSCH resource) is set smaller than the CSI payload, the proposed methods may be used to reduce CSI payload regardless of the UL resource.

The proposals may also be applied when the AIML UE predicts future CSI (e.g., CSI for the channel after the CSI reporting time) and reports the same to the BS.

The parameters mentioned in the proposals, the applicability of the proposals, and the like may be idnciated by the BS to the UE, reported to the BS by the UE, or set as fixed values.

FIG. 17 illustrates an exemplary communication system to which the embodiment is applied.

Referring to FIG. 17, a communication system 1 applied to the embodiment includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the embodiment.

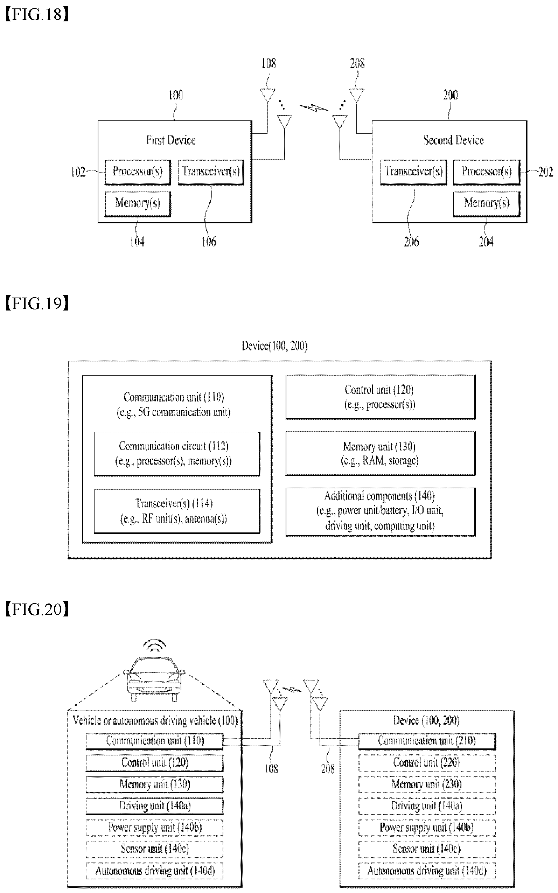

FIG. 18 illustrates exemplary wireless devices to which the embodiment is applicable.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the embodiment, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the embodiment, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 19 illustrates other exemplary wireless devices to which the embodiment is applied. The wireless devices may be implemented in various forms according to a use case/service (see FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 20 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 19 illustrates other exemplary wireless devices to which the embodiment is applied. The wireless devices may be implemented in various forms according to a use case/service. (see FIG. 17)

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 20 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Those skilled in the art will appreciate that the embodiment may be carried out in other specific ways than those set forth herein without departing from the spirit and essential characteristics of the embodiment. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

It will be apparent to those skilled in the art that the disclosure may be embodied in other specific forms without departing from the scope of the present disclosure. Accordingly, the above detailed description should not be construed as limiting in all respects but should be considered as illustrative. The scope of the disclosure should be determined by a reasonable interpretation of the appended claims, and all changes within the equivalent scope of the present disclosure are intended to be included in the scope of the disclosure.

[Industrial Applicability]

The disclosure is applicable to UEs, BSs, or other apparatuses in a wireless mobile communication system.

**Claims**

1. A method performed by a user equipment (UE) in a wireless communication system, comprising:

   receiving a control signal for reporting channel status information (CSI) from a base station (BS);
   receiving at least one channel measurement resource (CMR) based on the control signal from the BS;
   calculating at least one precoding matrix index (PMI) related to at least one time instance from a time domain (TD) compressed codebook based on the at least one CMR; and
   transmitting the CSI to the BS based on an uplink grant resource included in the control signal, the CSI comprising information about a plurality of non-zero coefficients (NZCs) related to the at least one PMI,
   wherein the plurality of NZCs have a plurality of priority values determined by considering indexes of TD basis vectors, indexes of frequency domain (FD) basis vectors, indexes of spatial domain (SD) basis vectors, and indexes of layers in an order.

2. The method of claim 1, wherein the plurality of NZCs have higher priority values as the indexes of the TD basis vectors increases,

   wherein, based on the indexes of the TD basis vectors being the same, the plurality of NZCs have higher priority values as the indexes of the FD basis vectors increases,
   wherein, based on the indexes of the TD basis vectors being the same and the indexes of the FD basis vectors being the same, the plurality of NZCs have higher priority values as the indexes of the SD basis vectors increases.
   wherein, based on the indexes of the TD basis vectors being the same, the indexes of the FD basis vectors being the same and the indexes of the SD basis vectors being the same, the plurality of NZCs have higher priority values as the indexes of the layers increases.

3. The method of claim 1, wherein a priority value of a NZC is determined based on an Equation below,

   <Equation>

   $$\mathrm{Pri}(l, i, f, t) = 2Lv N_3 * \pi'(t) + 2 \cdot L \cdot v \cdot \pi(f) + v \cdot i + l$$

   where $l$ is an index of a layer, $i$ is an index of a SD basis vector, $f$ is an index of a FD basis vector and $t$ is an index of a TD basis vector,
   where $v$ is a number of the layers, $2L$ is a number of the SD basis vectors, $N_3$ is a value related to a number of the FD basis vectors, and $\pi'(t)$ is a function for transforming the index of the TD basis vector.

4. The method of claim 1, further comprising:
   based on the uplink grant resource being smaller than a payload of the CSI, dropping at least one of the NZCs in descending order of the priority values assigned to the plurality of NZCs.

5. The method of claim 1, wherein a maximum number of NZCs per layer is determined by multiplying a number of the TD basis vectors, a number of the FD basis vectors, a number of SD basis vectors and a constant,
   wherein the constant is greater than 0 and is less than or equal to 1.

6. A user equipment (UE) in a wireless communication system, comprising:

   at least one transceiver;
   at least one processor; and
   at least one computer memory operably connectable to the at least one processor and storing instructions that, when executed, cause the at least one processor to perform operations, the operations comprising:
   receiving a control signal for reporting channel status information (CSI) from a base station (BS);
   receiving at least one channel measurement resource (CMR) based on the control signal from the BS;
   calculating at least one precoding matrix index (PMI) related to at least one time instance from a time domain (TD) compressed codebook based on the at least one CMR; and
   transmitting the CSI to the BS based on an uplink grant resource included in the control signal, the CSI comprising information about a plurality of non-zero coefficients (NZCs) related to the at least one PMI,
   wherein the plurality of NZCs have a plurality of priority values determined by considering indexes of TD basis vectors, indexes of frequency domain (FD) basis vectors, indexes of spatial domain (SD) basis vectors, and indexes of layers in an order.

7. The UE of claim 6, wherein the plurality of NZCs have higher priority values as the indexes of the TD basis vectors increases,

wherein, based on the indexes of the TD basis vectors being the same, the plurality of NZCs have higher priority values as the indexes of the FD basis vectors increases,

wherein, based on the indexes of the TD basis vectors being the same and the indexes of the FD basis vectors being the same, the plurality of NZCs have higher priority values as the indexes of the SD basis vectors increases.

wherein, based on the indexes of the TD basis vectors being the same, the indexes of the FD basis vectors being the same and the indexes of the SD basis vectors being the same, the plurality of NZCs have higher priority values as the indexes of the layers increases.

8. The UE of claim 6, wherein a priority value of a NZC is determined based on an Equation below,

<Equation>

$$\mathrm{Pri}(l, i, f, t) = 2L\upsilon N_3 * \pi'(t) + 2 \cdot L \cdot \upsilon \cdot \pi(f) + \upsilon \cdot i + l$$

where $l$ is an index of a layer, $i$ is an index of a SD basis vector, $f$ is an index of a FD basis vector and $t$ is an index of a TD basis vector,

where $\upsilon$ is a number of the layers, $2L$ is a number of the SD basis vectors, $N_3$ is a value related to a number of the FD basis vectors, and $\pi'(t)$ is a function for transforming the index of the TD basis vector.

9. The UE of claim 6, wherein the operations further comprise:
based on the uplink grant resource being smaller than a payload of the CSI, dropping at least one of the NZCs in descending order of the priority values assigned to the plurality of NZCs.

10. The UE of claim 6, wherein a maximum number of NZCs per layer is determined by multiplying a number of the TD basis vectors, a number of the FD basis vectors, a number of SD basis vectors and a constant,
wherein the constant is greater than 0 and is less than or equal to 1.

11. A processing device in a wireless communication system, comprising:

at least one processor; and
at least one computer memory operably connectable to the at least one processor and storing instructions that, when executed, cause the at least one processor to perform operations for a user equipment (UE), the operations comprising:

receiving a control signal for reporting channel status information (CSI) from a base station (BS);
receiving at least one channel measurement resource (CMR) based on the control signal from the BS;
calculating at least one precoding matrix index (PMI) related to at least one time instance from a time domain (TD) compressed codebook based on the at least one CMR; and
transmitting the CSI to the BS based on an uplink grant resource included in the control signal, the CSI comprising information about a plurality of non-zero coefficients (NZCs) related to the at least one PMI,
wherein the plurality of NZCs have a plurality of priority values determined by considering indexes of TD basis vectors, indexes of frequency domain (FD) basis vectors, indexes of spatial domain (SD) basis vectors, and indexes of layers in an order.

12. A computer-readable storage medium storing at least one program code comprising instructions that, when executed, cause at least one processor to perform operations for a user equipment (UE), the operations comprising:

receiving a control signal for reporting channel status information (CSI) from a base station (BS);
receiving at least one channel measurement resource (CMR) based on the control signal from the BS;
calculating at least one precoding matrix index (PMI) related to at least one time instance from a time domain (TD) compressed codebook based on the at least one CMR; and

transmitting the CSI to the BS based on an uplink grant resource included in the control signal, the CSI comprising information about a plurality of non-zero coefficients (NZCs) related to the at least one PMI,

wherein the plurality of NZCs have a plurality of priority values determined by considering indexes of TD basis vectors, indexes of frequency domain (FD) basis vectors, indexes of spatial domain (SD) basis vectors, and indexes of layers in an order.

EP 4 564 695 A1

【FIG.1】

【FIG.2】

29

【FIG.3】

Resource grid

A carrier (up to 3300 subcarriers, i. e., 275 RBs)

A BWP

1 RB = 12 subcarriers

1 RE

1 subcarrier

1 symbol

【FIG.4】

Long PUSCH

PDCCH

Gap

PDSCH/PUSCH

Short PUCCH

Long PUSCH

1 Slot

f

t

【FIG.5】

DL assignment-to-PDSCH offset (K0)

PDSCH-to-HARQ-ACK reporting offset (K1)

【FIG.6】

UL grant-to-PUSCH offset (K2)

【FIG.7】

【FIG.8】

【FIG.9】

| | Input Layer |
| | Hidden Layer |
| | Output Layer |

【FIG.10】

【FIG.11】

4 Feature Maps

Input Image 36 X 36   28 X 28

14 X 14

Convolution
(Kernel: 9X9X1)

Max Pooling

【FIG.12】

Encoder        Decoder

【FIG.13】

【FIG.14】

CSI Report

CMR
(or IMR)

CSI reference resource

Slot

$PMI_{ref\_rsc}$          $PMI_{ref\_rsc+\tau}$          $PMI_{ref\_rsc+2\tau}$

TD compressed codebook

【FIG.15】

CSI Report

CMR
(or IMR)

CSI reference resource

Slot

$PMI_{ref\_rsc-2\tau}$          $PMI_{ref\_rsc-\tau}$          $PMI_{ref\_rsc}$

TD compressed codebook

【FIG.16】

```
┌─────────────────────────────────────────┐  A05
│   Receiving control signal for CSI reporting  │
└─────────────────────────────────────────┘
                    │
                    ▼
┌─────────────────────────────────────────┐  A10
│         Receiving at least one CMR         │
└─────────────────────────────────────────┘
                    │
                    ▼
┌─────────────────────────────────────────┐  A15
│   Estimating NZC for multiple time instances  │
│          in TD compressed codebook         │
└─────────────────────────────────────────┘
                    │
                    ▼
┌─────────────────────────────────────────┐  A20
│  Generating CSI by dropping at least one NZC  │
│          according to priority values       │
│       if UL grant is smaller than payload    │
└─────────────────────────────────────────┘
                    │
                    ▼
┌─────────────────────────────────────────┐  A25
│                Reporting CSI               │
└─────────────────────────────────────────┘
```

【FIG.17】

【FIG.18】

【FIG.19】

【FIG.20】

## INTERNATIONAL SEARCH REPORT

International application No.

**PCT/KR2023/010581**

### A. CLASSIFICATION OF SUBJECT MATTER

**H04B 7/06**(2006.01)i; **H04B 7/0456**(2017.01)i; **H04W 72/23**(2023.01)i

According to International Patent Classification (IPC) or to both national classification and IPC

### B. FIELDS SEARCHED

Minimum documentation searched (classification system followed by classification symbols)

H04B 7/06(2006.01); H04B 7/00(2006.01); H04B 7/0456(2017.01); H04L 5/00(2006.01); H04W 4/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(channel state information), TD 압축(time domain compression), 코드북 (codebook), 기저 벡터(basis vector), 우선 순위(priority)

### C. DOCUMENTS CONSIDERED TO BE RELEVANT

| Category* | Citation of document, with indication, where appropriate, of the relevant passages | Relevant to claim No. |
|---|---|---|
| Y | WO 2021-035396 A1 (QUALCOMM INCORPORATED et al.) 04 March 2021 (2021-03-04) See paragraphs [0092], [0099], [0102] and [0104]-[0106]; and figure 21. | 1-2,4,6-7,9,11-12 |
| A | | 3,5,8,10 |
| Y | US 2022-0006496 A1 (LG ELECTRONICS INC.) 06 January 2022 (2022-01-06) See paragraphs [0590], [0691] and [0719]. | 1-2,4,6-7,9,11-12 |
| A | QUALCOMM INCORPORATED et al. Correction of NZC partitioning in eType II CSI. R1-2202799, 3GPP TSG RAN WG1 #108-e, e-Meeting. 02 March 2022. See section 5.2.3. | 1-12 |
| A | NOKIA et al. Correction in the number of NZC mapped in Group 1 and 2. R1-2202315, 3GPP TSG RAN WG1 #108-e, e-Meeting. 14 February 2022. See section 5.2.3. | 1-12 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 October 2023** | **01 November 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/010581** |

### C.    DOCUMENTS CONSIDERED TO BE RELEVANT

| Category* | Citation of document, with indication, where appropriate, of the relevant passages | Relevant to claim No. |
|---|---|---|
| A | WO 2021-028425 A1 (FRAUNHOFER-GESELLSCHAFT ZUR FÖRDERUNG DER ANGEWANDTEN FORSCHUNG E.V.) 18 February 2021 (2021-02-18) See page 41, line 25 – page 47, line 5; and figures 6-22. | 1-12 |

Form PCT/ISA/210 (second sheet) (July 2022)

## INTERNATIONAL SEARCH REPORT
### Information on patent family members

International application No.

**PCT/KR2023/010581**

| Patent document cited in search report | | | Publication date (day/month/year) | Patent family member(s) | | | Publication date (day/month/year) |
|---|---|---|---|---|---|---|---|
| WO | 2021-035396 | A1 | 04 March 2021 | CN | 114424479 | A | 29 April 2022 |
| | | | | EP | 4018687 | A1 | 29 June 2022 |
| | | | | EP | 4018687 | A4 | 31 May 2023 |
| | | | | US | 2022-0302979 | A1 | 22 September 2022 |
| US | 2022-0006496 | A1 | 06 January 2022 | WO | 2020-091544 | A1 | 07 May 2020 |
| WO | 2021-028425 | A1 | 18 February 2021 | CN | 114223145 | A | 22 March 2022 |
| | | | | CN | 114270722 | A | 01 April 2022 |
| | | | | EP | 3780455 | A1 | 17 February 2021 |
| | | | | EP | 3780456 | A1 | 17 February 2021 |
| | | | | EP | 4014403 | A1 | 22 June 2022 |
| | | | | EP | 4014403 | B1 | 20 September 2023 |
| | | | | EP | 4018585 | A1 | 29 June 2022 |
| | | | | JP | 2022-544552 | A | 19 October 2022 |
| | | | | JP | 2022-544664 | A | 20 October 2022 |
| | | | | KR | 10-2022-0048475 | A | 19 April 2022 |
| | | | | KR | 10-2022-0048476 | A | 19 April 2022 |
| | | | | US | 2022-0286165 | A1 | 08 September 2022 |
| | | | | US | 2022-0286176 | A1 | 08 September 2022 |
| | | | | WO | 2021-028284 | A1 | 18 February 2021 |

Form PCT/ISA/210 (patent family annex) (July 2022)